# EUROPEAN PATENT APPLICATION

(11) **EP 0 946 041 A2**
(43) Date of publication of application: **29.09.1999**
(21) Application number: 98119537.3
(22) Date of filing: 15.10.1998
(51) Int. Cl.: H04N 1/047

(54) **Electronic image scanner with position encoding pattern**

(30) Priority: 23.03.1998 US 46261
(71) Applicant: Hewlett-Packard Company, Palo Alto, California 94304 (US)
(72) Inventor: Steinle, Michael J., Fort Collins, CO 80525 (US); Batten, Patrick A., Fort Collins, CO80521 (US)
(74) Representative: Schoppe, Fritz, Dipl.-Ing.

(57) **Abstract**

An image scanner in which photosensors within an imaging photosensor array (110, 408), in conjunction with a linear position encoding pattern (112, 406), are used to generate position signals (204, 206) for a closed-loop motor control system. As a result, a separate rotary encoder is not required and overall system cost is reduced.

## Description

### FIELD OF INVENTION

This invention relates generally to optical image scanners, facsimile machines and copiers and more specifically to positional control of a moving carriage within a scanner.

### BACKGROUND OF THE INVENTION

Electronic image scanners convert an optical image into an electronic form suitable for storage, transmission or printing. In a typical image scanner, light from an image is focused onto linear arrays of photosensors for scanning one line at a time. A two dimensional image is scanned by providing relative movement between the linear sensor arrays and the original image. In some scanners, lamps for illumination and a photosensor array are all mounted into a carriage that is moved relative to a stationary image. Typically, the carriage is moved with an open-loop control system using stepper motors. Alternatively, a closed-loop system may be provided using servo motors with attached rotary position encoders.

There is a need for a lower cost system for moving the carriage.

### SUMMARY OF THE INVENTION

A scanner is provided with a linear positional encoding pattern alongside an image area. Some of the imaging photosensors are used to sense the encoding pattern. Signals from the imaging photosensors that are used to sense the encoding pattern are then used as positional encoding signals for a closed-loop carriage positioning system using servo motors. As a result, a separate rotary encoder is not required and overall system cost is reduced.

### BRIEF DESCRIPTION OF THE DRAWINGS

Figure 1A is a block diagram side view of a scanner in accordance with the invention.
Figure 1B is a top view of the scanner of figure 1A.
Figure 1C is a an end view of the scanner of figure 1A illustrating one optional embodiment of a sensor array.
Figure 1D is an end view of the scanner of figure 1A illustrating a second optional embodiment of a sensor array.
Figure 2A is a plane view of a section of a linear position encoding pattern in accordance with the invention.
Figures 2B and 2C are waveforms generated by optical sensing elements as a carriage is moved past the encoding pattern of figure 2A.
Figure 3 is a block diagram side view as in figure 1A illustrating a closed-loop motor control system.
Figure 4A is block diagram of a sheet feed scanner in which a document is moved past a stationary sensor array.
Figure 4B is a side view of the scanner of figure 4A.

### DETAILED DESCRIPTION OF THE PREFERRED EMBODIMENT OF THE INVENTION

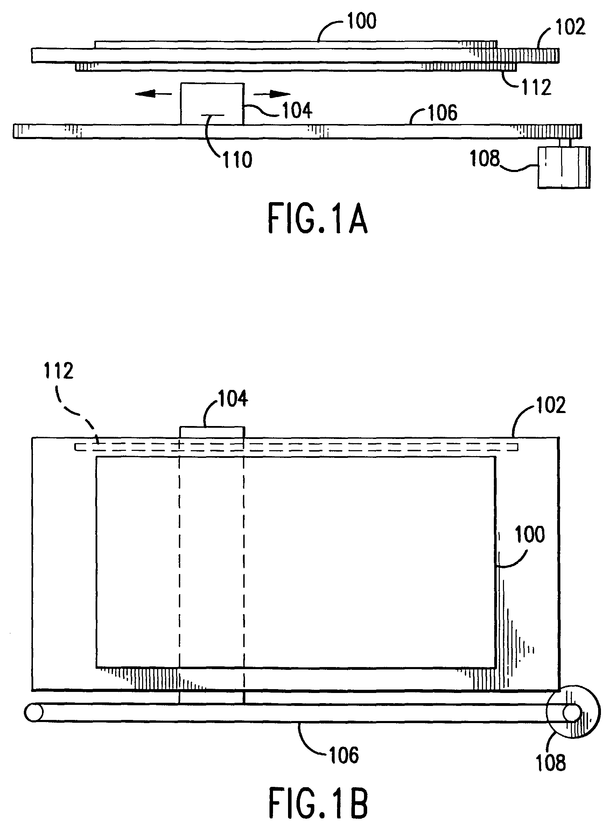

Figure 1A illustrates an electronic image scanner, which may be a part of a copier or facsimile machine. A document 100 is placed onto a transparent platen 102. A moveable carriage 104 is beneath the platen. The carriage 104 is attached to a belt 106 which in turn is moved by a motor 108. The carriage 104 includes an array of photosensors 110 used to sense light intensity from at least one line on the document 100. Figure 1B is a top view illustrating that the platen 102 is typically larger than the document 100. Belt 106 is just an example. The motor may be mounted in the carriage with a friction drive wheel against a stationary surface. The primary requirement is for controlled relative movement between the document 100 and the photosensors 110.

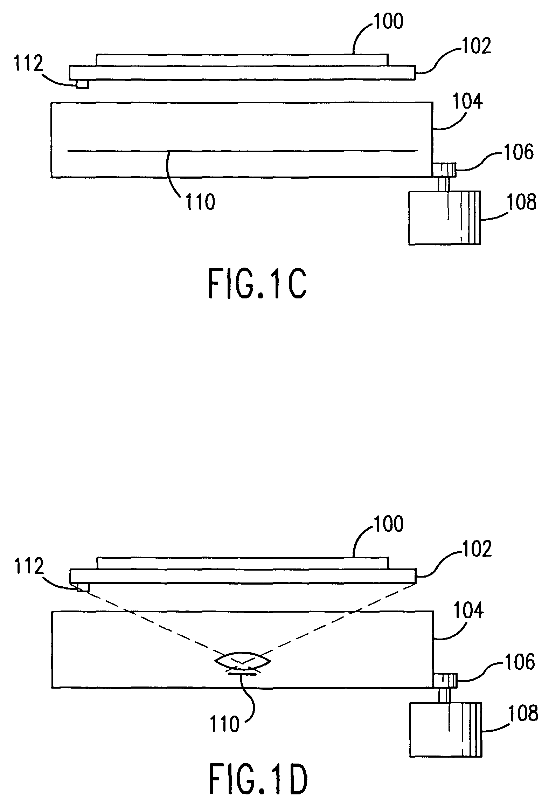

Figure 1C illustrates an embodiment in which the photosensor array 110 may be longer than the width of the document 100, for example a contacting imaging sensor. A system with a large imaging sensor as illustrated in figure 1C may or may not have supplemental optics, such as a light-pipe or a fiber-optic wave guide. Figure 1D illustrates an alternative embodiment in which optics are used to reduce a line from the document 100 onto a much smaller photosensor array 110, for example an array of charge coupled devices. For either type of array, at least some of the elements sense light that comes from areas beyond the edges of the document 100.

Also illustrated in figures 1A - 1D is a linear position encoding pattern 112. In figures 1A, 1C and 1D the pattern 112 is illustrated as a strip being mounted below the platen 102 but in general it may be mounted, printed, painted or molded anywhere outside the area of the document 100, within the visible area viewed by the photosensor array 110 and within the focal range of the photosensor array 110.

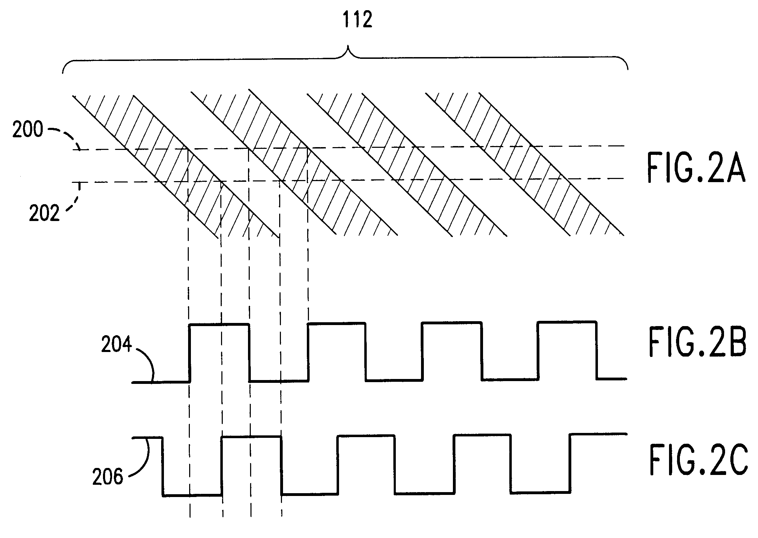

Figure 2A is an expanded view of a section of the encoding pattern 112. The pattern may be any pair of colors having sufficient contrast to generate a signal as discussed below in conjunction with figures 2B and 2C. As the carriage 104 moves relative to the encoding pattern 112, one photosensor within the photosensor array 110 senses light along a path indicated by reference number 200 and a second photosensor senses light along a path indicated by reference number 202. Waveform 204 is the output of the photosensor sensing light along path 200 and waveform 206 is the output of the photosensor sensing light along path 202. As depicted in figures 2B and 2C, waveform 206 is offset in time by one-fourth of a cycle relative to waveform 204. In the encoder industry, such waveforms are described as quadrature waveforms. Decoder electronics are readily available for receiving quadrature waveforms and determining direction of movement and providing a count for each transition of each input waveform. Alternatively, decoding may be implemented within an application specific integrated circuit (ASIC). Alternatively, digital waveforms may be directly interfaced to a microprocessor where direction and count are then determined by software.

In figures 2B and 2C, the waveforms are depicted as binary. As a sensor moves relative to a color transition the resulting sensor output has a finite slope as the area sensed for one color diminishes and the area sensed for the contrasting color increases. The sensor output may be processed by a comparator to generate a binary waveform as depicted in figures 2B and 2C. Alternatively, the sensor output may be processed by an analog-to-digital (A/D) converter and a microprocessor receiving the A/D output can take advantage of intermediate values to sense positions between color transitions, effectively increasing resolution. In addition, the encoding pattern 112 may incorporate color gradients instead of sharp transitions to enhance the ability to sense intermediate positions.

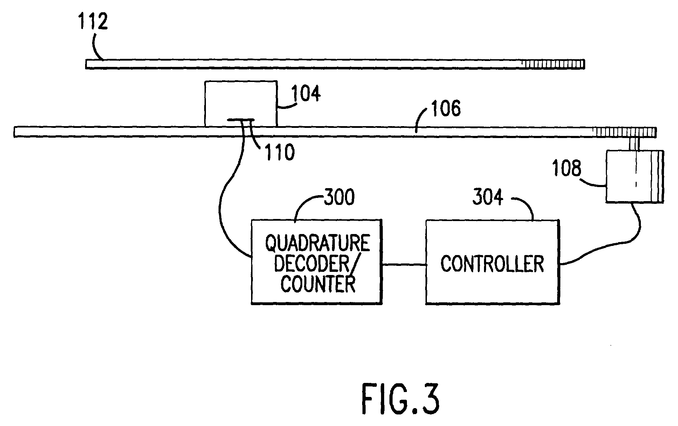

Figure 3 illustrates a closed-loop system using the encoding pattern and the image sensor array. In figure 3, the sensor array is connected to a decoder 300 which in turn is connected to a motor controller 304 which in turn controls motor 108. Rotation of motor 108 moves belt 106 which moves carriage 104. Movement of carriage 104 is sensed by sensor array 110 viewing pattern 112. Both the decoder 300 and the controller 304 may be included in an ASIC. Alternatively, the decoding function may be performed by software.

By coupling the waveforms depicted in figures 2B and 2C to appropriate decoder electronics, the position of the carriage 104 can be determined relative to a reference position. Therefore, use of sensors included within the photosensor array in conjunction with a low cost printed pattern strip enables elimination of a separate position encoder, thereby reducing the cost of the scanner.

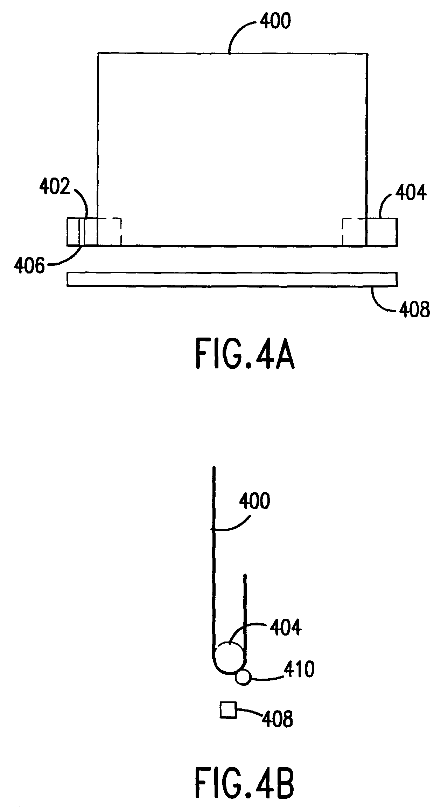

Note that in the embodiment discussed above, the document is fixed and the carriage moves. In general, only relative movement is required so that the carriage may be fixed and the document may be moved relative to the carriage. In that case, the encoding pattern needs to move with the document. For example, in a sheet-feed scanner where a document is moved relative to a stationary sensor array, the encoding pattern may be formed onto a friction roller or belt used to drive the paper. An example is illustrated in figures 4A and 4B. In figure 4A, a document 400 is being moved by friction rollers 402 and 404 past a stationary sensor array 408. In figure 4B, the document 400 is pinched between friction wheel 404 and a driving capstan 410. In figure 4A, roller 402 includes an encoding pattern 406 that is visible to the sensor array 408. Sensor array 408 generates quadrature signals that are used for closed loop positioning as discussed above.

Note also that in an embodiment such as figure 1D where the photosensor array is a CCD array, charges from individual CCD elements may need to be shifted in an analog shift register to appropriate electronics for generating signals based on the charges. Therefore, there may be some delay before the signals are generated, but the delay is consistent, and the delay can be accounted for in a closed-loop motor control system.

The foregoing description of the present invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. An image scanner comprising:
an array of photosensors (110, 408) comprising a first photosensor, a second photosensor, and additional photosensors for image sensing;
a pattern (112, 406);
the first photosensor generating a first signal (204) in response to light being received from the pattern;
the second photosensor generating a second signal (206) in response to light being received from the pattern; and
the first and second electronic signals suitable for determining a position of the array of photosensors relative to the pattern.

2. A method of controlling a position of a photosensor array (110, 408) in an image scanner, the method comprising the following steps:
sensing, by a first photosensor in the photosensor array, a pattern (110, 402);
sensing, by a second photosensor in the photosensor array, the pattern;
sensing, by additional photosensors in the photosensor array, an image;
generating a first signal (204), by the first photosensor, in response to the sensed pattern;
generating a second signal (206), by the second photosensor, in response to the sensed pattern; and
using the first and second signals to determine a position of the photosensor array relative to the image.
